# EUROPEAN PATENT APPLICATION

(11) **EP 4 600 504 A1**
(43) Date of publication of application: **13.08.2025**
(21) Application number: 24156255.2
(22) Date of filing: 07.02.2024
(51) Int. Cl.: F16B 2/24, F16B 5/06, F16B 5/12, G09F 21/04, F16B 2/20, G09F 7/18, B62D 21/00, B60R 13/00, F16B 37/06, F16B 35/06

(54) **SYSTEM AND METHOD FOR CONNECTING VEHICLE**

(71) Applicant: VOLVO TRUCK CORPORATION, 405 08 Göteborg (SE)
(72) Inventor: KOMMOJU, Shrinivas, 490020 Bhilai (IN); RAMACHANDRAN, Munirathnam, 560037 Bangalore (IN)
(74) Representative: Ström & Gulliksson AB

(57) **Abstract**

A system for connecting a multibracket (100) to a vehicle frame (200) is provided. The multibracket (100) comprises a trough (101) to be placed across the vehicle frame (200) and at least one spring clip (102) extending into the trough (101). The vehicle frame (200) comprises at least one pin (201) extending distally from the vehicle frame (200), said at least one pin (201) extending along a pin axis (**P**), and said at least one pin (201) comprising a pin head (202) at a distal end thereof. The multibracket (100) is adapted to be placed across the vehicle frame (200), such that the at least one pin (201) extends into the trough (101) to cooperate with the at least one spring clip (102), such that a lip (103) on the at least one spring clip (102) is biased against the at least one pin (201) proximally of the pin head (202).

## Description

### TECHNICAL FIELD

The disclosure relates generally to the field of connecting components on a vehicle. In particular aspects, the disclosure relates to the field of connecting a multibracket to a vehicle frame. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

In the field of connecting components to vehicle frames, sometimes an assembler needs to assemble parts without seeing the actual connecting elements, i.e. so called "blind assembly". It is then difficult to confirm if the parts in question have been connected in a satisfactory way.

Additionally, when assembling multibrackets on the front of a vehicle frame, it is desired to hinder the multibracket from displacement along the x-axis, i.e. the longitudinal axis of the vehicle frame. Obtaining this fixation of the multibracket along the x-axis could sometimes jeopardize positioning of the multibracket along the z-axis, i.e. a vertical axis of the vehicle frame.

It is therefore desired to obtain a system and method for connecting components to a vehicle frame, wherein the assembler is provided with ample feedback when the component has been correctly connected, as well as securing the component in more than one direction.

### SUMMARY

According to a first aspect of the disclosure, a system for connecting a multibracket to a vehicle frame, is provided, wherein the multibracket comprises a trough to be placed across the vehicle frame and at least one spring clip extending into the trough, wherein the vehicle frame comprises at least one pin extending distally from the vehicle frame, said at least one pin extending along a pin axis, and said at least one pin comprising a pin head at a distal end thereof; wherein the multibracket is adapted to be placed across the vehicle frame, such that the at least one pin extends into the trough to cooperate with the at least one spring clip, such that a lip on the at least one spring clip is biased against the at least one pin proximally of the pin head. The first aspect of the disclosure may seek to solve the problem of how to ensure that the assembler gets ample feedback that the multibracket has been correctly assembled, while simultaneously obtaining a fixation of the multibracket in relation to the vehicle frame in more than one direction. A technical benefit may include a haptic feedback to the assembler, as well as the multibracket being biased towards the vehicle frame.

Optionally in some examples, including in at least one preferred example, the at least one spring clip is biased axially and transversally against the at least one pin. A technical benefit may include that the multibracket is secured in relation to the vehicle frame also in the longitudinal direction of the vehicle.

Optionally in some examples, including in at least one preferred example, the lip of the spring clip is at a first end section of the spring clip. A technical benefit may include that the spring clip does not extend around the pin, and then interaction between the multibracket and the pin is improved.

Optionally in some examples, including in at least one preferred example, the spring clip is connected to the multibracket at a spring clip connecting part on a support body via a second end section. A technical benefit may include that the spring clip makes sure that the counter force upon interaction with the pin is taken up by the multibracket, such that the multibracket in turn can be biased into a desired position.

Optionally in some examples, including in at least one preferred example, the spring clip connecting part is positioned outside the trough. A technical benefit may include that space in the trough is used effectively, and the regulation of the biasing force of the spring clip may be facilitated.

Optionally in some examples, including in at least one preferred example, the spring clip is arranged adjacent an edge of the trough. A technical benefit may include that the spring clip may rest upon a surface along its extension, which may ensure that the biasing force of the spring clip acts in the intended direction.

Optionally in some examples, including in at least one preferred example, the pin head is spherical. A technical benefit may include that the interaction between the pin and the spring clip is smooth, and that haptic feedback may be improved.

Optionally in some examples, including in at least one preferred example, the pin is connected to the vehicle frame through a welded nut. A technical benefit may include that the pin is securely attached to the vehicle frame.

Optionally in some examples, including in at least one preferred example, the multibracket comprises a central panel, extending substantially parallel to the trough. A technical benefit may include that the vehicle then may present relevant information on the front.

Optionally in some examples, including in at least one preferred example, the central panel comprises a LED sign arrangement. A technical benefit may include that the vehicle then may present relevant information on the front in an energy effective way.

According to a second aspect of the disclosure, the system is comprised in a vehicle. The second aspect of the disclosure may seek to solve the problem of how to ensure that the assembler gets ample feedback that the multibracket has been correctly assembled on a vehicle, while simultaneously obtaining a fixation of the multibracket in relation to the vehicle frame in more than one direction. A technical benefit may include a haptic feedback to the assembler as well as the multibracket being biased towards the vehicle frame.

According to a third aspect of the disclosure, a method is provided for connecting a multibracket to a vehicle frame, wherein the multibracket comprises a trough to be placed across the vehicle frame and at least one spring clip extending into the trough, wherein the vehicle frame comprises at least one pin extending distally from the vehicle frame, said at least one pin extending along a pin axis, and said at least one pin comprising a pin head at a distal end thereof, said method comprising the steps of: displacing the multibracket towards the vehicle frame, such that the pin enters into the trough and contacts the spring clip; and advancing the multibracket along the pin axis, such that the spring clip biases against the pin and follows a contour of the pin head, until a lip on the spring clip snaps proximally of the pin head. The third aspect of the disclosure may seek to solve the problem of how to ensure that the assembler gets ample feedback that the multibracket has been correctly assembled on a vehicle, while simultaneously obtaining a fixation of the multibracket in relation to the vehicle frame in more than one direction. A technical benefit may include a haptic feedback to the assembler as well as the multibracket being biased towards the vehicle frame.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is a schematic view of a vehicle, wherein an area A, in which a multibracket is connected to a vehicle frame, is disclosed.
**FIG. 2** is a schematic view of an aspect of the disclosure, wherein a multibracket is connected to a vehicle frame.
**FIG. 3** is a schematic view of an aspect of the disclosure, wherein a sequence of connecting a multibracket to a vehicle frame is disclosed.

### DETAILED DESCRIPTION

The detailed description set forth below provides information and examples of the disclosed technology with sufficient detail to enable those skilled in the art to practice the disclosure.

Specifically, the disclosure provides a system and method for connecting components to a vehicle frame, wherein the assembler may be provided with ample feedback when the component has been correctly connected, as well as the component may be secured in more than one direction. More specifically, the assembler may be provided with haptic feedback when the multibracket is in correct position, and the multibracked may be biased towards the vehicle frame.

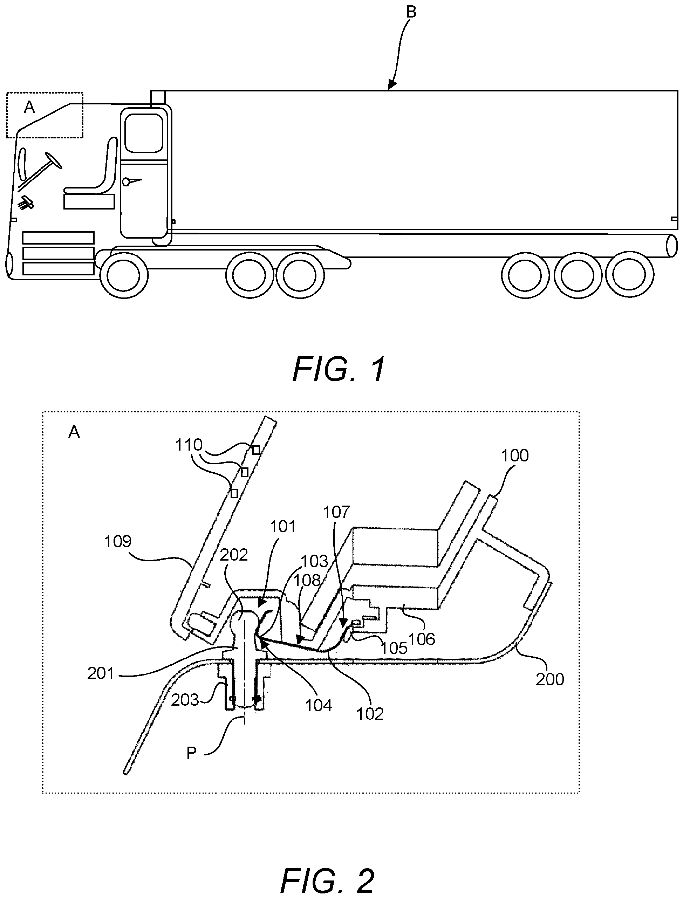

**FIG. 1** is an exemplary disclosure of a section A on a vehicle B in which the disclosure is beneficially used. The vehicle B is herein disclosed in the form of a truck, but the vehicle B may also be another kind of vehicle, such as heavy-duty vehicles, such as trucks, buses, and construction equipment, among other vehicle types.

**FIG. 2** is an exemplary disclosure of a multibracket 100 connected to a vehicle frame 200, in section A. The multibracket 100 comprises a trough 101. The trough 101 may be placed across the vehicle frame 200. In this configuration the trough 101 extends transversally to a horizontal axis of the vehicle B. The trough 101 may be generally U-shaped along its extension. At least one spring clip 102 may extend into the trough 101. The number of spring clips 102 may vary, depending on the width of the vehicle B, but should be selected such that the connection between the multibracket 100 and the vehicle frame 200 is adequate. Normally, when the vehicle B is a heavy-duty vehicle, such as a truck, the number of spring clips may be selected to be three, four, five or six.

The vehicle frame 200 may comprise at least one pin 201, extending distally from the vehicle frame 200. The number of pins 201 may vary, depending on the width of the vehicle B, but should be selected such that the connection between the multibracket 100 and the vehicle frame 200 is adequate. Normally, when the vehicle B is a heavy-duty vehicle, such as a truck, the number of spring clips may be selected to be three, four, five or six. Also, the number of pins 201 is selected to correspond to the number of spring clips 102, such that they may interact with each other. Further, the pins 201 are arranged on the vehicle frame 200 such that they correspond in placement with the spring clips 102, when the multibracket 100 is applied onto the vehicle frame 200. The pin 201 extends along a pin axis P. Pin axis P is normally orthogonal to the vehicle frame 200 at the connection site. At a distal end of the pin 201 a pin head 202 may be provided. The pin head 202 facilitates cooperation between the pin 201 and the spring clip 102.

The multibracket 100 may be adapted to be placed across the vehicle frame 200, such that the at least one pin 201 extends into the trough 101 to cooperate with the at least one spring clip 102. When the at least one pin 201 extends into the trough 101 to cooperate with the at least one spring clip 102, a lip 103 on the at least one spring clip 102 is biased against the at least one pin 201 proximally of the pin head 202. The lip 103 may be a first end section 104 of the spring clip 102, but it may also be a bend on the spring clip 102, such that the spring clip 102 extends beyond the lip 103. The spring clip 102 may extend further around the pin head 202, but it may be preferred to have the first end section of the spring clip 102 ending proximally of the end of the pin head 202 in assembled position. The pin head 202 may be spherical. When the pin head 202 is spherical a technical benefit may include that the interaction between the pin and the spring clip is smooth, and that haptic feedback may be improved. The pin 201 is connected to the vehicle frame 200 through a welded nut 203.

When the at least one spring clip 102 is biased against the at least one pin 201, the at least one spring clip 102 may be biased axially and transversally against the at least one pin 201. This is so, since the spring clip 102 may act against the pin head 202, to bias the multibracket 100 towards the vehicle frame 200 downwards along pin axis P as well as horizontally towards a back portion of the vehicle frame 200.

The spring clip 102 may be connected to the multibracket 100 at a spring clip connecting part 105 on a support body 106 via a second end section 107. In this way, a technical benefit may include that the spring clip makes sure that the counter force upon interaction with the pin is taken up by the multibracket, such that the multibracket in turn can be biased into a desired position. The spring clip connecting part 105 is positioned outside the trough 101. In this way a technical benefit may include that space in the trough is used effectively, and the regulation of the biasing force of the spring clip may be facilitated. When the spring clip 102 is connected to the support body 106 outside the trough 101, the spring clip 102 may be arranged adjacent an edge 108 of the trough 101. A technical benefit from this may include that space in the trough is used effectively, and the regulation of the biasing force of the spring clip may be facilitated.

The multibracket 100 may comprise a central panel 109. The central panel 109 may extend substantially parallel to the trough 101. The central panel 109 may comprise a LED sign arrangement 110. A technical benefit from this may include that the vehicle B then may present relevant information on the front, and present relevant information in an energy effective way.

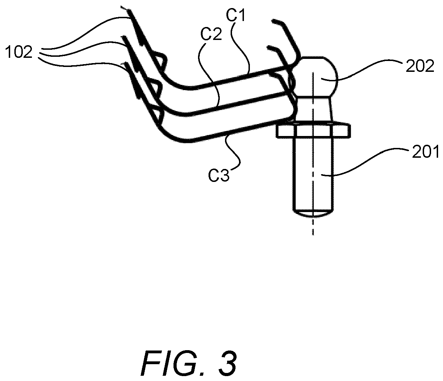

**FIG. 3** discloses a sequence of steps that may be realized when assembling the multibracket 100 onto a vehicle frame 200. Herein, for facilitating understanding, only the spring clip 102 and the pin 201, with its pin head 202, are disclosed. When assembling the multibracket 100 onto the vehicle frame 200, the multibracket 100 may be displaced towards the vehicle frame 200, such that the pin 201 enters the trough 101. In a first configuration C1, the spring clip 102 engages or contacts the top of the pin head 202. As the multibracket 100 is displaced further towards the vehicle frame 200, the spring clip 102 may yield to bias against the pin head 202. This may be illustrated by configuration C2. In configuration C2 the spring clip 102, such as the lip 103, follows the contour of the pin head 202 as the biasing force accumulates in spring clip 102. Once, the multibracket 100 has been advanced further towards the vehicle frame 200, the lip 103 of the spring clip 102 continues to follow the contour of the pin head 202. Since, biasing force has been accumulated in the spring clip 102, the lip 103 will snap into cooperation with the pin 201 proximally of the pin head 202, once the multibracket 100 continues the displacement towards the vehicle frame 200, to obtain configuration C3. During the transition from configuration C2 to C3 the snap movement of the spring clip 102 gives rise to a sound, i.e. a haptic feedback to the assembler. Also, as well the multibracket 100 may be biased towards the vehicle frame 100 in both vertical and horizontal direction.

**Example 1:** A system for connecting a multibracket 100 to a vehicle frame 200, wherein the multibracket 100) comprises a trough 101 to be placed across the vehicle frame 200 and at least one spring clip 102 extending into the trough 101, wherein the vehicle frame 200 comprises at least one pin 201 extending distally from the vehicle frame 200, said at least one pin 201 extending along a pin axis P, and said at least one pin 201 comprising a pin head 202 at a distal end thereof; wherein the multibracket 100 is adapted to be placed across the vehicle frame 200, such that the at least one pin 201 extends into the trough 101 to cooperate with the at least one spring clip 102, such that a lip 103 on the at least one spring clip 102 is biased against the at least one pin 201 proximally of the pin head 202.

**Example 2:** The system according to example 1, wherein the at least one spring clip 102 is biased axially and transversally against the at least one pin 201.

**Example 3:** The system according to example 1 or 2, wherein the lip 103 of the spring clip 102 is at a first end section 104 of the spring clip 102.

**Example 4:** The system according to one of the preceding examples, wherein the spring clip 102 is connected to the multibracket 100 at a spring clip connecting part 105 on a support body 106 via a second end section 107.

**Example 5:** The system according to example 4, wherein the spring clip connecting part 105 is positioned outside the trough 101.

**Example 6:** The system according to example 5, wherein the spring clip 102 is arranged adjacent an edge 108 of the trough 101.

**Example 7:** The system according to any one of the preceding examples, wherein the pin head 202 is spherical.

**Example 8:** The system according to any one of the preceding examples, wherein the pin 201 is connected to the vehicle frame 200 through a welded nut 203.

**Example 9:** The system according to any one of the preceding examples, wherein the multibracket 100 comprises a central panel 109, extending substantially parallel to the trough 101.

**Example 10:** The system according to example 9, wherein the central panel 109 comprises a LED sign arrangement 110.

**Example 11:** A vehicle B comprising a system according to any one of examples 1 to 10.

**Example 12:** A method for connecting a multibracket 100 to a vehicle frame 200, wherein the multibracket 100 comprises a trough 101 to be placed across the vehicle frame 200 and at least one spring clip 102 extending into the trough 101, wherein the vehicle frame 200 comprises at least one pin 201 extending distally from the vehicle frame 200, said at least one pin 201 extending along a pin axis P, and said at least one pin 201 comprising a pin head 202 at a distal end thereof, said method comprising the steps of: displacing the multibracket 100 towards the vehicle frame 200, such that the pin 201 enters into the trough 101 and contacts the spring clip 102; and advancing the multibracket 100 along the pin axis P, such that the spring clip 102 biases against the pin 201 and follows a contour of the pin head 202, until a lip 103 on the spring clip 102 snaps proximally of the pin head 202.

**Example 13:** The method according to example 12, wherein the at least one spring clip 102 is biased axially and transversally against the at least one pin 201.

**Example 14:** The method according to example 12 or 13, wherein the lip 103 of the spring clip 102 is at a first end section 104 of the spring clip 102.

**Example 15:** The method according to any one of examples 12 to 14, wherein the spring clip 102 is connected to the multibracket 100 at a spring clip connecting part 105 on a support body 106 via a second end section 107.

**Example 16:** The method according to example 15, wherein the spring clip connecting part 105 is positioned outside the trough 101.

**Example 17:** The method according to example 16, wherein the spring clip 102 is arranged adjacent an edge 108 of the trough 101.

**Example 18:** The method according to any one of examples 12 to 17, wherein the pin head 202 is spherical.

**Example 19:** The method according to any one of examples 12 to 18, wherein the pin 201 is connected to the vehicle frame 200) through a welded nut 203.

**Example 20:** The method according to any one of examples 12 to 19, wherein the multibracket 100 comprises a central panel 109, extending substantially parallel to the trough 101.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A system for connecting a multibracket (100) to a vehicle frame (200), wherein the multibracket (100) comprises a trough (101) to be placed across the vehicle frame (200) and at least one spring clip (102) extending into the trough (101), wherein the vehicle frame (200) comprises at least one pin (201) extending distally from the vehicle frame (200), said at least one pin (201) extending along a pin axis (P), and said at least one pin (201) comprising a pin head (202) at a distal end thereof; wherein the multibracket (100) is adapted to be placed across the vehicle frame (200), such that the at least one pin (201) extends into the trough (101) to cooperate with the at least one spring clip (102), such that a lip (103) on the at least one spring clip (102) is biased against the at least one pin (201) proximally of the pin head (202).

2. The system according to claim 1, wherein the at least one spring clip (102) is biased axially and transversally against the at least one pin (201).

3. The system according to claim 1 or 2, wherein the lip (103) of the spring clip (102) is at a first end section (104) of the spring clip (102).

4. The system according to any one of the preceding claims, wherein the spring clip (102) is connected to the multibracket (100) at a spring clip connecting part (105) on a support body (106) via a second end section (107).

5. The system according to claim 4, wherein the spring clip connecting part (105) is positioned outside the trough (101).

6. The system according to claim 5, wherein the spring clip (102) is arranged adjacent an edge (108) of the trough (101).

7. The system according to any one of the preceding claims, wherein the pin head (202) is spherical.

8. The system according to any one of the preceding claims, wherein the pin (201) is connected to the vehicle frame (200) through a welded nut (203).

9. The system according to any one of the preceding claims, wherein the multibracket (100) comprises a central panel (109), extending substantially parallel to the trough (101).

10. The system according to claim 9, wherein the central panel (109) comprises a LED sign arrangement (110).

11. A vehicle (B) comprising a system according to any one of claims 1 to 10.

12. A method for connecting a multibracket (100) to a vehicle frame (200), wherein the multibracket (100) comprises a trough (101) to be placed across the vehicle frame (200) and at least one spring clip (102) extending into the trough (101), wherein the vehicle frame (200) comprises at least one pin (201) extending distally from the vehicle frame (200), said at least one pin (201) extending along a pin axis (P), and said at least one pin (201) comprising a pin head (202) at a distal end thereof, said method comprising the steps of:
displacing the multibracket (100) towards the vehicle frame (200), such that the pin (201) enters into the trough (101) and contacts the spring clip (102); and
advancing the multibracket (100) along the pin axis (P), such that the spring clip (102) biases against the pin (201) and follows a contour of the pin head (202), until a lip (103) on the spring clip (102) snaps proximally of the pin head (202).

13. The method according to claim 12, wherein the at least one spring clip (102) is biased axially and transversally against the at least one pin (201).

14. The method according to claim 12 or 13, wherein the lip (103) of the spring clip (102) is at a first end section (104') of the spring clip (102).

15. The method according to any one of claims 12 to 14, wherein the spring clip (102) is connected to the multibracket (100) at a spring clip connecting part (105) on a support body (106) via a second end section (107).

16. The method according to claim 15, wherein the spring clip connecting part (105) is positioned outside the trough (101).

17. The method according to claim 16, wherein the spring clip (102) is arranged adjacent an edge (108) of the trough (101).

18. The method according to any one of claims 12 to 17, wherein the pin head (202) is spherical.

19. The method according to any one of claims 12 to 18, wherein the pin (201) is connected to the vehicle frame (200) through a welded nut (203).

20. The method according to any one of claims 12 to 19, wherein the multibracket (100) comprises a central panel (109), extending substantially parallel to the trough (101).
